# FASCICULE DE BREVET EUROPEEN

(11) **EP 3 476 977 B1**
(45) Date de publication et mention de la délivrance du brevet: **13.05.2020**
(21) Numéro de dépôt: 18201320.1
(22) Date de dépôt: 18.10.2018
(51) Int. Cl.: C25B 1/12, C25B 15/08, C25B 9/20, H01M 8/12, H01M 8/2425, H01M 8/04089, H01M 8/04119, H01M 8/0438, H01M 8/04492, H01M 8/04746, H01M 8/0282, H01M 8/0276, H01M 8/124, C25B 1/06, C25B 9/06

(54) **MOTIF ÉLÉMENTAIRE RÉVERSIBLE D'ÉLECTROLYSE OU DE CO-ÉLECTROLYSE DE L'EAU (SOEC) OU DE PILE À COMBUSTIBLE (SOFC) À FONCTIONNEMENT SOUS PRESSION ET EFFORT DE COMPRESSION DÉCOUPLÉ**
REVERSIBLE WIEDERHOLENDE EINHEIT VON WASSER ELEKTROLYSE ODER CO-ELEKTROLYSE (SOEC) ODER EINER BRENNSTOFFZELLE, DIE UNTER DRUCK ODER ENTKOPPELTER DRUCKSPANNUNG ARBEITET
REVERSIBLE REPEATING UNIT OF WATER ELECTROLYSIS OR CO ELECTROLYSIS (SOEC) OR FUEL CELL (SOFC) FUNCTIONING UNDER PRESSURE AND DECOUPLED COMPRESSIVE STRESS

(30) Priorité: 30.10.2017 FR 1760204
(43) Date de publication de la demande: 01.05.2019
(73) Titulaire: Commissariat à l'Energie Atomique et aux Energies Alternatives, 75015 Paris (FR)
(72) Inventeur: PLANQUE, Michel, 38054 GRENOBLE Cedex 09 (FR); BERNARD, Charlotte, 38054 GRENOBLE Cedex 09 (FR); ROUX, Guilhem, 38054 GRENOBLE Cedex 09 (FR)
(74) Mandataire: Nony

(56) Documents cités:
- WO-A1-2016/096752
- FR-A1- 3 042 069
- US-A1- 2002 081 471
- STEPHANIE SEIDLER ET AL: "Pressurized solid oxide fuel cells: Experimental studies and modeling", JOURNAL OF POWER SOURCES, vol. 196, no. 17, 7 octobre 2010 (2010-10-07), pages 7195-7202, XP055260130, CH ISSN: 0378-7753, DOI: 10.1016/j.jpowsour.2010.09.100

## Description

### Domaine technique

La présente invention concerne le domaine des piles à combustibles à oxydes solides (SOFC, acronyme anglais pour « Solid Oxide Fuel Cell »), celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyser Cell », et celui de la co-électrolyse à haute température de l'eau et d'un autre gaz choisi parmi le dioxyde de carbone CO₂ ou le dioxyde d'azote NO₂.

L'invention a trait plus particulièrement à la réalisation d'un nouveau module intégrant des interconnecteurs électrique et fluidique pour la distribution du courant électrique et des gaz au sein d'un réacteur d'électrolyse ou de co-électrolyse de l'eau à haute température (EHT) de type SOEC pour produire de l'hydrogène H₂ à partir de vapeur d'eau H₂O, ou d'une pile à combustible de type SOFC, et une cellule électrochimique élémentaire.

Le module selon l'invention permet un fonctionnement sous pression.

Bien que décrite en référence principalement à l'application d'électrolyse de l'eau à haute température, l'invention s'applique tout aussi bien à une co-électrolyse d'eau et d'un autre gaz choisi parmi le dioxyde de carbone CO₂ ou le dioxyde d'azote NO₂, qu'à une pile à combustible SOFC.

L'invention s'applique à une pile à combustible SOFC utilisant comme combustible soit de l'hydrogène, soit hydrocarbure, par exemple le méthane CH₄.

### Art antérieur

L'électrolyse de l'eau une réaction électrolytique qui décompose l'eau en dioxygène et dihydrogène gazeux avec l'aide d'un courant électrique selon la réaction: H₂O→H₂ + 1/2O₂.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en œuvre l'électrolyse à haute température, il est connu d'utiliser un électrolyseur de type SOEC (acronyme anglais de « *Solid Oxyde Electrolyser Cell* »), constitué d'un empilement de motifs élémentaires comportant chacun une cellule d'électrolyse à oxyde solide, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H₂ et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

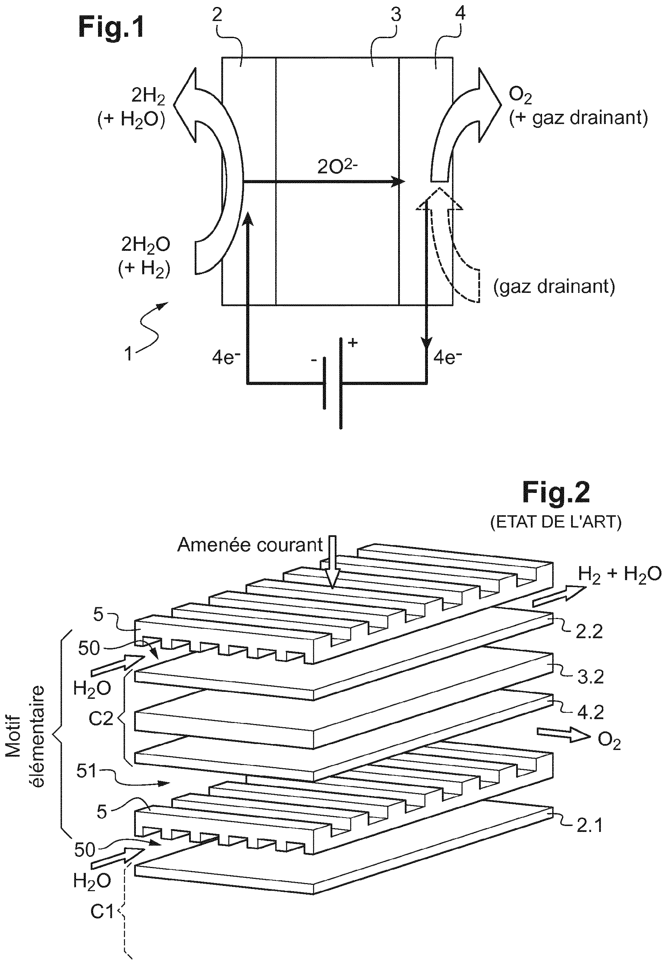

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électriques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2 H₂O + 4e⁻ → 2 H₂ + 2 O²⁻.

A l'anode 4, la demi-réaction est la suivante:

2 O²⁻ → O₂+ 4e⁻.

L'électrolyte 3 intercalé entre les deux électrodes 2, 4 est le lieu de migration des ions O^{2-,} sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires Cl, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau en ions oxygène par celle-ci.

L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air qui alimente les compartiments cathodiques et de l'hydrogène en tant que combustible qui alimente les compartiments anodiques.

Un fonctionnement satisfaisant d'un électrolyseur EHT nécessite entre autres les fonctions essentielles suivantes:
A/ une bonne isolation électrique entre deux interconnecteurs adjacents dans l'empilement, sous peine de court-circuiter la cellule d'électrolyse élémentaire intercalée entre les deux interconnecteurs ;
B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur ; cela correspond à rechercher une tension initiale complète (acronyme anglais « OCV » pour Open Cell Voltage) ;
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules; cela correspond à rechercher la plus faible résistance de polarisation;
D/ un bon contact électrique et une surface de contact suffisante entre chaque cellule et interconnecteur, afin d'obtenir la plus faible résistance ohmique entre cellules et interconnecteurs.

Les hautes températures compliquent considérablement la réalisation des trois fonctions essentielles A/ à C/ précitées. En outre, la fragilité des cellules à oxydes solides impose certaines règles de conception contraignantes de manière à garantir leur intégrité mécanique.

Différentes conceptions existent déjà pour réaliser simultanément les quatre fonctions essentielles A/ à D/, mais il subsiste différentes difficultés à surmonter.

En particulier, en ce qui concerne la réalisation de la fonction B/, compte tenu des gammes de température de fonctionnement des électrolyseurs EHT et piles à combustibles SOFC élevées, typiquement 600°C à 1000°C, les joints d'étanchéités sont classiquement réalisés à base de verre ou de vitrocéramique. Un joint verre est à l'état pâteux à la température de fonctionnement.

Lors de la conception, il est nécessaire de veiller à ne pas chasser le verre sous l'effet d'un écart de pression appliquée sur le joint. Un joint en vitrocéramique subit quant à lui un cycle thermique in situ visant à le faire cristalliser et donc à le rendre solide à la température de fonctionnement. Tout comme pour le joint en verre, il faut veiller à ne pas chasser la vitrocéramique avant qu'elle ne soit solide.

La configuration la plus simple consiste à placer le verre entre deux plans denses, par opposition aux différents matériaux poreux présents dans un réacteur SOEC ou une pile à combustible SOFC : la tension de surface permet d'éviter son écoulement jusqu'à un certain différentiel de pression de part et d'autre du joint.

Pour favoriser cette tenue, il est nécessaire de réduire au mieux la hauteur du joint, d'augmenter la surface des zones en contact avec le verre et de réduire le différentiel de pression subi par le joint.

La réalisation de ce type d'étanchéités à base de verre au sein des réacteurs SOEC ou piles SOFC se heurte à plusieurs problèmes. Tout d'abord, les électrodes de part et d'autre de la cellule sont poreuses et elles ne peuvent donc pas simplement supporter de joint à base de verre. De plus, une isolation électrique entre interconnecteurs adjacentes doit être garantie, ce qu'un film de verre trop mince ne peut assurer sans risque. Enfin, ces verres doivent être écrasés pour réduire leur hauteur, mais aussi pour garantir le contact électrique entre cellule et interconnecteurs. Ce serrage doit se faire en évitant tout porte-à-faux de la cellule pour préserver son intégrité mécanique.

Dans la configuration divulguée dans la demande de brevet FR3000108, une partie de ces contraintes est prise en compte par la densité des surfaces non poreuses de part et d'autre d'un joint : une cellule élémentaire est maintenue à plat sur son support (cathode en EHT ou anode SOFC) et enserrée entre deux interconnecteurs adjacents, un premier et deuxième joints de type verre ou vitrocéramique, séparés d'un isolant électrique pour éviter tout-circuit, sont agencés entre interconnecteurs pour permettre de réaliser l'étanchéité de l'hydrogène produit (combustible amené en SOFC) et enfin, un troisième joint du même type est agencé du côté de l'anode (cathode en SOFC) entre l'électrolyte et l'interconnecteur permettant de réaliser l'étanchéité de l'oxygène produit (ou l'air amené en SOFC). Ainsi, dans la configuration divulguée, chaque joint repose sur un support intrinsèquement étanche donc non poreux. De plus, une tension de surface élevée entre les joints et leur support permet d'éviter l'écoulement du verre jusqu'à un certain différentiel de pression de part et d'autre d'un joint. Pour favoriser l'obtention d'une bonne tenue mécanique du joint, il est nécessaire autant que possible de réduire la hauteur de joint et d'augmenter la surface des zones en contact avec le verre.

La réduction de hauteur des joints en verre ou en vitrocéramique telle qu'explicitée ci-avant est obtenue par serrage. Le serrage est en outre requis pour diminuer l'impact des résistances de contact dans l'empilement, c'est-à-dire pour assurer la fonction D/ précitée, soit un bon contact électrique entre cellule et interconnecteurs. Or, une cellule d'électrolyse est montée en porte-à-faux du fait de son joint d'étanchéité. Ainsi, le serrage requis pour diminuer la hauteur des joints et assurer la fonction D/ de bon contact électrique entre cellule et interconnecteurs doit en outre être réalisé sans mise en flexion rédhibitoire de la cellule qui pourrait conduire à sa rupture.

Ainsi, les configurations avec joint à base de verre ou de vitrocéramique, comme celle de la demande FR3000108, présentent des avantages indéniables d'isolation électrique et d'accommodation des déformations entre pièces d'un empilement EHT ou SOFC.

Cela étant, comme déjà évoqué, les joints à base de verre ou de vitrocéramique présentent intrinsèquement l'inconvénient majeur de ne résister qu'à de faibles différences de pression, de l'ordre de quelques centaines de millibars.

Le fonctionnement interne d'une pile SOFC ou d'un réacteur EHT sous pression, typiquement de quelques bars à quelques dizaines de bars, typiquement 30 bars, requiert alors une solution pour éviter la perte des étanchéités par les joints.

Il est déjà connu une solution qui consiste à placer le réacteur à empilement EHT ou pile SOFC au sein d'une enceinte étanche elle-même pressurisée. On peut citer ici les demandes de brevets ou brevets FR 2957361A1, US2002/0081471 et US 6689499 B2 qui divulguent ce type de solution. Cette solution connue offre l'avantage de pouvoir imposer la même pression entre l'intérieur et l'extérieur de l'empilement. Cela permet donc un fonctionnement à une pression élevée, de quelques bars à quelques dizaines de bars, sans sollicitation mécanique des joints en verre ou en vitrocéramique.

Mais, cela impose de garantir la tenue mécanique d'une enceinte pressurisée à ces pressions, typiquement 30 bars, et qui contient un empilement sous une température élevée, typiquement à 800°C avec circulation en son sein d'hydrogène H₂ et d'oxygène O₂. La gestion de la sécurité de cette enceinte à pression peut ne pas être triviale.

De plus, la présence de l'enceinte complique le maintien du serrage de l'empilement qui permet de garantir un bon contact électrique entre interconnecteurs et cellules. En particulier, le déport des organes de serrage dans une zone relativement froide n'est pas aisé.

Enfin, l'enceinte pressurisée doit être réalisée avec des passages à la fois traversants et étanches afin de réaliser l'alimentation/récupération en gaz et en courant électrique depuis l'extérieur de l'enceinte. Ainsi, ces passages doivent être isolants électriques pour certains d'entre eux et être à température contrôlée pour ceux contenant de la vapeur d'eau de manière à éviter toutes bouffées de vapeur d'eau. En effet, si on ne contrôle pas la température dans les tuyaux d'entrée et ou de sortie, la vapeur d'eau circulant en continu à l'intérieur peut rencontrer une zone froide, et alors se condenser de manière non contrôlée. Cela provoque des bouffées qui génèrent des variations d'alimentation en gaz et en pression.

Toutes ces mesures de précaution conduisent à une installation complète intégrant l'enceinte étanche pressurisée et le réacteur EHT ou la pile SOFC, qui est compliquée et coûteuse.

La demanderesse a alors proposé dans la demande WO2016/096752 une solution qui permet un fonctionnement sous pression tout en s'affranchissant d'une enceinte étanche pressurisée logeant un réacteur EHT (électrolyseur) ou une pile SOFC.

Cette solution consiste à réaliser un module élémentaire avec un circuit de circulation d'un gaz supplémentaire aux gaz réactifs nécessaires à la réaction d'électrolyse ou à la réaction inverse dans une pile SOFC, le circuit étant adapté pour que, lors du fonctionnement en pression, ce gaz supplémentaire vienne équilibrer sur un côté des joints d'étanchéité à base de verre et/ou de vitrocéramique la pression des gaz réactifs générée de l'autre côté.

On reproduit ici plus en détail la description d'un mode de réalisation d'un module élémentaire M1 selon la demande WO2016/096752, en relation avec les figures 3 à 6.

On précise tout d'abord que les bouchons (B) montrés sur ces figures servent à rendre étanche par soudage les percements réalisés dans les composants d'interconnecteurs pour délimiter les conduits d'amenée et de récupération des gaz. Mais, une fois les interconnecteurs finis, ils n'ont pas de fonction dans le fonctionnement d'un réacteur EHT.

Le module M1 comporte une cellule (C1) électrochimique élémentaire de forme axisymétrique autour d'un axe central X, la cellule étant formée d'une cathode, d'une anode, et d'un électrolyte intercalé entre la cathode et l'anode, deux interconnecteurs électrique et fluidique 5.1, 5.2 de part et d'autre de la cellule.

Les deux interconnecteurs 5.1, 5.2 sont réalisés chacun en une seule pièce métallique, de préférence en acier ferritique à environ 20% de chrome, de préférence en CROFER® 22APU ou le F18TNb, ou à base Nickel de type Inconel® 600 ou Haynes®.

L'interconnecteur supérieur 5.1 est percé d'un conduit 50 d'amenée de la vapeur d'eau, débouchant selon l'axe central sur la cellule du côté de la cathode. Comme expliqué par la suite, il est prévu une distribution radiale de la vapeur d'eau amenée et de l'hydrogène produit jusqu'à un conduit 59 de récupération de l'hydrogène produit, débouchant parallèlement à l'axe central à la périphérie de la cellule du côté de la cathode.

L'interconnecteur inférieur 5.2 est percé d'un conduit 51 d'amenée de gaz drainant, tel que l'air, débouchant selon l'axe central sur la cellule du côté de l'anode. Comme expliqué par la suite, il est prévu une distribution radiale de l'air amené et de l'oxygène produit jusqu'à un conduit 54 de récupération de l'oxygène produit, débouchant parallèlement à l'axe central à la périphérie de la cellule du côté de l'anode.

Un premier joint d'étanchéité 61 de forme axisymétrique autour de l'axe central X, est agencé à la périphérie de la cellule élémentaire C1 et en appui à la fois contre chacun des deux interconnecteurs. Ce joint est prévu pour réaliser l'étanchéité autour du compartiment cathodique.

Un deuxième joint d'étanchéité 63 de forme axisymétrique autour de l'axe central, est agencé à la périphérie de l'anode de la cellule élémentaire et en appui à la fois contre l'interconnecteur inférieur et contre l'électrolyte. Ce joint est prévu pour réaliser l'étanchéité autour du compartiment anodique. Les joints d'étanchéité 61 et 63 sont à base de verre et/ou de vitrocéramique.

Un dispositif d'isolation électrique et d'étanchéité 8 de forme axisymétrique autour de l'axe central X est agencé à la périphérie du premier joint d'étanchéité autour du compartiment cathodique.

Le dispositif 8 est constitué d'une rondelle 80 isolante électriquement formant une cale, enserrée par des troisième et quatrième joints d'étanchéité métalliques 81, 82 sans contact l'un avec l'autre. Chacun de ces troisième et quatrième joints 81, 82 est métallique et en appui respectivement contre l'interconnecteur supérieur et inférieur.

L'interconnecteur inférieur 5.2 est percé d'au moins un conduit d'amenée 58 d'un gaz, dit gaz d'équilibrage, et d'au moins un conduit de récupération 58 de ce gaz d'équilibrage débouchant sur l'espace annulaire E délimité entre le joint 61 et le dispositif 8 de sorte à réaliser une distribution annulaire du gaz d'équilibrage, afin d'équilibrer les pressions de part et d'autre du premier joint d'étanchéité 61 lors du fonctionnement.

Le dispositif 8 est adapté pour résister à un différentiel de pressions important entre la pression du gaz d'équilibrage, que l'on amène à la valeur la plus proche possible de la pression de fonctionnement du réacteur EHT, typiquement de 10 à 30 bars et la pression extérieure au module, typiquement 1 bar. La rondelle isolante 80 permet d'éviter tout court-circuit entre l'interconnecteur inférieur 5.2 et l'interconnecteur supérieur 5.1. Enfin, les joints métalliques sont adaptés pour présenter des dilatations compatibles avec les matériaux des interconnecteurs, notamment les interconnecteurs à base d'acier inoxydable ferritique.

La rondelle ou cale 80 isolante peut être en zircone et les deux joints métalliques 81, 82 à base d'alliage comprenant du chrome et du fer, par exemple en Fecralloy®.

L'interconnecteur supérieur 5.1 est percé d'un conduit d'amenée latéral 52 débouchant dans le conduit 50 d'amenée central, comme visible en figures L'interconnecteur supérieur comprend également une gorge annulaire 53 pour recevoir le joint métallique supérieur 81 et la cale isolante 80.

L'interconnecteur inférieur 5.2 comporte quant à lui une portée sur laquelle est positionnée à la fois le deuxième joint 63 et la cellule élémentaire. De la périphérie immédiate de la cellule vers l'extérieur, l'interconnecteur inférieur 5.2 comprend une gorge annulaire 54 pour l'écoulement radial du mélange H₂O/H₂, une surface plane et une autre gorge annulaire 55 concentrique de celle autour de la cellule pour recevoir le dispositif d'étanchéité 8. La surface plane est percée d'un conduit d'amenée latéral destiné à être en communication avec le conduit d'amenée central 51 de l'interconnecteur supérieur 5.1.

La surface plane de l'interconnecteur inférieur 5.2 sert de support au joint 61 et autour du conduit d'amenée latéral 56. On voit que le joint 61 comprend de préférence une rondelle ou couronne en mica 610 présentant des fentes 611 dans laquelle un cordon en verre ou en vitrocéramique est réalisé. Lors du serrage, ce cordon en verre ou en vitrocéramique va couler dans les fentes 611 et ainsi créer une liaison bien adhérente entre les deux interconnecteurs 5.1 et 5.2 qui est en outre calée latéralement par la couronne en mica 610.

L'interconnecteur inférieur 5.2 est percé d'une gorge annulaire 55 débouchant dans les conduits d'amenée 58 et de récupération 58 du gaz d'équilibrage.

Chacun de ces conduits d'amenée 58 et de récupération 58 du gaz d'équilibrage débouche dans la gorge 55 de logement du dispositif d'étanchéité 8. Un jeu de montage latéral du dispositif d'étanchéité 8 dans les gorges 53, 55 respectivement de l'interconnecteur supérieur 5.1 et inférieur 5.2, est prévu, ce jeu étant suffisant pour permettre le passage du gaz d'équilibrage dans l'espace annulaire (E) ainsi défini entre dispositif 8 et l'intérieur des gorges 53, 55. Le passage réalisé en fond de perçage du conduit d'amenée 58 à l'intérieur du dispositif d'étanchéité 8 qui permet l'arrivée du gaz d'équilibrage dans l'espace annulaire (E) et ainsi d'assurer la distribution annulaire de ce dernier. En quelque sorte, cette distribution annulaire du gaz d'équilibrage forme un rideau périphérique de gaz autour des compartiments de gaz réactifs, ce qui permet d'équilibrer les pressions.

Grâce à la présence des gorges 54, 57 de distribution des gaz réactifs sur l'interconnecteur inférieur 5.2, le module selon l'invention avec les deux interconnecteurs et la cellule en géométrie axisymétrique autour de l'axe X permet une alimentation homogène et radiale de la cellule en gaz réactifs quel que soit le niveau de pression.

Le module M1 selon l'invention comporte également des grilles de contact électrique 9, 10 de part et d'autre de la cellule C1. Ces éléments de contact électrique qui peuvent notamment avoir pour effet de compenser des défauts de planéité afin d'obtenir un meilleur contact électrique entre d'une part l'interconnecteur supérieur et la cathode et d'autre part entre l'interconnecteur inférieur et l'anode.

Le module M1 peut comprendre, à la périphérie du dispositif d'isolation et d'étanchéité 8, une couronne 13 isolante électriquement, du type en mica, la couronne 13 venant en appui sur toutes les zones où les deux surfaces périphériques des interconnecteurs 5.1 et 5.2 sont en regard l'une de l'autre.

Le module M1 intègre un boulon 11 monté traversant dans des logements réalisés dans les interconnecteurs 5.1, 5.2. La tête 110 du boulon 11 traversant repose dans un logement d'un interconnecteur d'extrémité 5.2 ou 5.3 et un écrou 111 vissé sur le boulon traversant fait saillie sur l'autre interconnecteur d'extrémité 5.1, l'écrou 111 étant en appui indirectement par le biais d'une rondelle 112 sur un manchon 12 isolant électrique monté dans le logement de l'interconnecteur supérieur 5.2 ou 5.1.

Le boulon 11 constitue un dispositif qui interdit l'ouverture intempestive du module lors du fonctionnement sous pression, ce qui assure une sécurité de fonctionnement mais pas le serrage par compression de la cellule entre les interconnecteurs. Le serrage, garant de l'étanchéité et du contact électrique est par ailleurs réalisé en appliquant un effort de compression bien adapté d'un interconnecteur sur l'autre.

Enfin, plusieurs tuyaux sont connectés aux différents conduits d'amenée et de récupération des gaz réalisés dans les interconnecteurs de la façon suivante :
- un tuyau d'amenée latérale 14 du gaz d'équilibrage est connecté sur le conduit d'amenée latérale 58 de l'interconnecteur inférieur 5.2 ou 5.3, tandis qu'un tuyau de récupération 15 du gaz d'équilibrage est connecté sur le conduit de récupération latérale 58 de l'interconnecteur inférieur ;
- un tuyau d'amenée centrale de l'air 16 est connecté sur le conduit d'amenée central de l'interconnecteur inférieur 5.2 ou 5.3, tandis qu'un tuyau de récupération 19 de l'oxygène produit est connecté sur la gorge annulaire 57 de l'interconnecteur inférieur 5.2 ou 5.3;
- un tuyau d'amenée centrale de la vapeur d'eau 17 est connecté sur le conduit d'amenée latéral de l'interconnecteur inférieur 5.2 ou 5.3 lui-même débouchant sur celui de l'interconnecteur supérieur 5.1, tandis qu'un tuyau de récupération 18 de l'hydrogène produit est connecté sur le conduit de récupération latérale 59 de l'interconnecteur inférieur.

Le fonctionnement d'un réacteur d'électrolyse EHT selon la demande WO2016/096752 comprenant plusieurs modules M1 qui viennent d'être décrits, les modules étant empilés les uns sur les autres, est le suivant.

On alimente le tuyau 17 en vapeur d'eau et donc les conduits d'amenée en vapeur d'eau 56, 52 et 50 et simultanément le tuyau 14 en gaz d'équilibrage et donc le conduit d'amenée 58 et l'espace annulaire E, la pression de la vapeur d'eau amenée étant sensiblement égale à celle du gaz d'équilibrage.

Simultanément également, on alimente le tuyau 16 en air, en tant que gaz drainant, et donc le conduit d'amenée 51, la pression de l'air amené étant sensiblement égale à celle du gaz d'équilibrage.

La vapeur d'eau distribuée radialement depuis le conduit d'amenée 50 et l'hydrogène produit par l'électrolyse de la vapeur d'eau, circule dans la gorge annulaire 54 puis est récupéré radialement dans le conduit de récupération 59 et donc par le tuyau de récupération 18.

Le gaz d'équilibrage circule dans l'espace annulaire E et est récupéré dans le conduit de récupération 58 et donc par le tuyau de récupération 15.

L'air distribué radialement depuis le conduit d'amenée 51 et l'oxygène produit par l'électrolyse de la vapeur d'eau circule radialement dans la gorge annulaire 57 puis est récupéré par le tuyau de récupération 19.

Si le fonctionnement sous pression d'un réacteur d'électrolyse à plusieurs modules M1 empilés s'avère satisfaisant, les inventeurs ont constaté que sa mise en œuvre pouvait s'avérer compliquée.

En effet, les chaines de côtes de tous les composants d'un module M1 sont déterminées pour garantir un écrasement des joints d'étanchéité métalliques 81, 82 en périphérie, ainsi que celui des grilles de contact électrique 9, 10. Typiquement, l'écrasement réalisé par serrage est de quelques dizaines de microns. L'effort de serrage par compression est ajusté lors de la montée en pression à l'intérieur du module M1.

Or, le fait de pouvoir garantir les deux fonctions (écrasement des joints, écrasement des grilles de contact électrique) simultanément s'est avéré délicat à réaliser. Au cours d'essais, les inventeurs ont pu mettre en exergue des problèmes de fuites qui sont apparus au niveau des joints métalliques, et qu'à contrario, en cas de bonne étanchéité au niveau de ces joints, l'écrasement des couches de contact à la pression désirée n'était pas satisfaisant.

Il existe donc un besoin de trouver une amélioration à la solution selon la demande WO2016/096752 tout en conservant son avantage majeur, qui est de s'affranchir des configurations existantes d'électrolyseur (EHT) de type SOEC ou de pile à combustible de type SOFC, qui nécessitent la mise en œuvre d'une enceinte étanche pressurisée logeant l'électrolyseur EHT ou la pile SOFC.

Un but de l'invention est de répondre au moins en partie à ce besoin.

### Exposé de l'invention

Pour ce faire, l'invention concerne, sous une alternative, un module, destiné à former un motif élémentaire d'un réacteur d'électrolyse ou de co-électrolyse de type SOEC, comprenant:
- une cellule électrochimique élémentaire formée d'une cathode, d'une anode, et d'un électrolyte intercalé entre la cathode et l'anode,
- un premier et un deuxième dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le deuxième interconnecteur étant percé d'un conduit de récupération de l'hydrogène produit, débouchant à la périphérie de la cellule du côté de la cathode; le deuxième interconnecteur étant percé d'un conduit de récupération de l'oxygène produit, débouchant à la périphérie de la cellule du côté de l'anode de sorte à réaliser une distribution homogène de l'oxygène produit jusqu'au conduit de récupération;
- un premier joint d'étanchéité et isolant électrique, agencé à la périphérie de la cellule élémentaire et en appui à la fois contre le premier interconnecteur et contre le deuxième interconnecteur;
- un deuxième joint d'étanchéité agencé à la périphérie de l'anode de la cellule élémentaire et en appui à la fois contre le deuxième interconnecteur et contre l'électrolyte; le deuxième joint d'étanchéité étant à base de verre et/ou de vitrocéramique ;
- des moyens mécaniques d'assemblage des interconnecteurs entre eux adaptés pour serrer par compression le premier joint d'étanchéité ;
- au moins un élément de contact électrique, agencé entre une des électrodes et l'un des interconnecteurs ;
- un piston d'écrasement comprenant un composant en matériau conducteur électronique et étanche aux gaz, le piston étant monté coulissant à l'intérieur du premier interconnecteur, le piston étant adapté pour venir écraser le(s) élément(s) de contact électrique; l'effort de compression du piston étant ajusté lors de la montée en pression de la vapeur d'eau et de l'hydrogène produit à l'intérieur du module ; le piston d'écrasement étant percé d'un conduit d'amenée de la vapeur d'eau, débouchant sur la cellule du côté de la cathode de sorte à réaliser une distribution homogène respectivement de la vapeur d'eau amenée et de l'hydrogène produit, depuis le conduit d'amenée jusqu'au conduit de récupération et,
- un soufflet d'étanchéité, assemblé par l'une de ses extrémités au piston et par l'autre de ses extrémités au premier interconnecteur ; le soufflet étant adapté à la fois pour contenir la pression de la vapeur d'eau et de l'hydrogène produit à l'intérieur du module et pour se déformer selon la direction de déplacement du piston.

Selon une variante, le deuxième interconnecteur est percé d'un conduit d'amenée de gaz drainant, tel que l'air, débouchant sur la cellule du côté de l'anode de sorte à réaliser une distribution homogène respectivement du gaz drainant amené et de l'oxygène produit, depuis le conduit d'amenée jusqu'au conduit de récupération.

L'invention concerne également, selon une autre alternative, un module, destiné à former un motif élémentaire d'une pile à combustible de type SOFC, comprenant:
- une cellule électrochimique élémentaire formée d'une cathode, d'une anode, et d'un électrolyte intercalé entre la cathode et l'anode,
- un premier et un deuxième dispositif formant chacun un interconnecteur électrique et fluidique, constitué chacun d'un composant en matériau conducteur électronique et étanche aux gaz ; les premier et deuxième interconnecteur étant agencés de part et d'autre de la cellule élémentaire; le deuxième interconnecteur étant percé d'un conduit de récupération de l'eau produite, à la périphérie de la cellule du côté de l'anode; le deuxième interconnecteur étant percé d'un conduit d'amenée d'air ou d'oxygène, débouchant sur la cellule du côté de la cathode et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;
- un premier joint d'étanchéité et isolant électrique, agencé à la périphérie de la cellule élémentaire et en appui à la fois contre le premier interconnecteur et contre le deuxième interconnecteur;
- un deuxième joint d'étanchéité agencé à la périphérie de la cathode de la cellule élémentaire et en appui à la fois contre le deuxième interconnecteur et contre l'électrolyte ; le deuxième joint d'étanchéité étant à base de verre et/ou de vitrocéramique ;
- des moyens mécaniques d'assemblage des interconnecteurs entre eux adaptés pour serrer par compression le premier joint d'étanchéité ;
- au moins un élément de contact électrique agencé entre une des électrodes et l'un des interconnecteurs ;
- un piston d'écrasement comprenant un composant en matériau conducteur électronique et étanche aux gaz, le piston étant monté coulissant à l'intérieur du premier interconnecteur, le piston étant adapté pour venir écraser le(s) élément(s) de contact électrique; l'effort de compression du piston étant ajusté lors de la montée en pression du combustible et de l'eau produite à l'intérieur du module; le piston d'écrasement étant percé d'un conduit d'amenée de combustible, débouchant sur la cellule du côté de l'anode de sorte à réaliser une distribution homogène respectivement du combustible amené et de l'eau produite, depuis le conduit d'amenée jusqu'au conduit de récupération et,
- un soufflet d'étanchéité, assemblé par l'une de ses extrémités au piston et par l'autre de ses extrémités au premier interconnecteur ; le soufflet étant adapté à la fois pour contenir la pression du combustible et de l'eau produite à l'intérieur du module et pour se déformer selon la direction de déplacement du piston.

Autrement dit, l'invention consiste essentiellement à concevoir un module élémentaire, au sein duquel les efforts nécessaires à l'écrasement des joints d'étanchéité sont découplés de ceux nécessaires aux éléments de contact électrique garants du passage de courant dans le module.

Ainsi, un module selon l'invention intègre un piston coulissant à l'intérieur d'un des interconnecteurs et dont l'effort de compression par masse gravitaire ou un vérin, ajustable lors de la montée en pression à l'intérieur du module, va venir garantir un écrasement du ou des éléments ce contact électrique. L'ajustement de l'effort de compression lors de la montée en pression permet de reprendre l'effet de fond.

Le soufflet permet de contenir la pression à l'intérieur du module élémentaire, et il est adapté pour se déformer en suivant le déplacement du piston.

Indépendamment du fonctionnement du piston avec son soufflet qui l'entoure, le premier joint d'étanchéité, de préférence sous la forme d'une couronne en mica, pris en sandwich entre les deux interconnecteurs d'un même module garantit l'étanchéité en pression du module par les moyens de maintien d'assemblage entre interconnecteurs, de préférence sous la forme de boulons.

Un module selon l'invention s'affranchit donc des éléments suivants présents dans un module selon la demande WO2016/096752:
- un dispositif d'étanchéité et d'isolation électrique qui avait pour fonction de maintenir la pression à l'intérieur du module ;
- un circuit de gaz d'équilibrage qui avait pour fonction lors du fonctionnement en pression d'équilibrer la pression sur un côté des joints d'étanchéité à base de verre et/ou de vitrocéramique la pression des gaz réactifs générée de l'autre côté ;
- un dispositif d'ouverture intempestive du module. La sécurité de fermeture selon la demande WO2016/096752 est un élément rajouté, sans aucun lien avec le fonctionnement du réacteur. Cette sécurité forme ainsi une barrière supplémentaire en cas d'explosion de l'ensemble. A l'inverse, dans le cas de la présente invention, les moyens mécaniques d'assemblage des interconnecteurs entre eux ont pour but d'écraser le premier joint d'étanchéité, afin de contenir la pression à l'intérieur du module.

Par conséquent, un module selon l'invention est bien plus simple à réaliser qu'un module selon la demande WO2016/096752 et d'une mise en œuvre également plus simple du fait de ne pas dépendre d'une chaîne de côtes pour réaliser à la fois l'écrasement des joints et celui des éléments de contact électrique.

Les moyens mécaniques d'assemblage des interconnecteurs entre eux sont avantageusement constitués par des boulons.

Le premier joint d'étanchéité peut être avantageusement constitué d'une rondelle ou couronne en mica.

Selon un mode de réalisation avantageux, le module comprend deux éléments de contact électrique, de préférence des grilles métalliques, dont l'un entre l'une des électrodes et l'un des interconnecteurs et l'autre entre l'autre des électrodes et l'autre des interconnecteurs.

Selon une variante de réalisation avantageuse, le premier et/ ou le deuxième interconnecteur comprend(nent) une première gorge réalisée entre le premier joint et la cellule (C1), le conduit d'amenée du premier interconnecteur étant en communication avec la première gorge, de sorte à réaliser la distribution homogène de la vapeur d'eau amenée et de l'hydrogène produit ou du combustible amené et de l'eau produite, jusqu'au conduit de récupération du premier interconnecteur.

Selon une autre variante de réalisation avantageuse, le deuxième interconnecteur comprend une deuxième gorge réalisée à l'intérieur d'une zone délimitée par le deuxième joint, le conduit d'amenée du deuxième interconnecteur étant en communication avec la deuxième gorge de sorte à réaliser la distribution homogène de l'oxygène produit ou de l'air amené, jusqu'au conduit de récupération du deuxième interconnecteur.

De préférence :
- les premier et deuxièmes interconnecteur sont percés chacun d'un conduit supplémentaire d'amenée de vapeur d'eau ou de combustible ; les deux conduits supplémentaires d'amenée étant reliés entre eux par l'intermédiaire d'une tube de raccord, isolant électrique ; le conduit supplémentaire d'amené du premier interconnecteur étant relié au conduit d'amenée percé dans le piston par un tuyau à l'extérieur du module;
- le premier joint intègre en son sein un troisième joint d'étanchéité à l'intérieur duquel est logé le tube de raccord.

Selon un mode de réalisation avantageux, la cellule électrochimique élémentaire, les premier et deuxième interconnecteurs, les premier et deuxième joints d'étanchéité, le piston et le soufflet sont de forme axisymétrique autour d'un axe central (X), les conduits d'amenée de gaz réactifs (vapeur d'eau ou de combustible) et (gaz drainant, tel que l'air, ou d'air ou oxygène) débouchant selon l'axe central

Le composant métallique du premier et/ou le deuxième interconnecteur et/ou le piston sont de préférence en acier ferritique à environ 20% de chrome, de préférence en CROFER® 22APU ou le F18TNb, ou à base Nickel de type Inconel® 600 ou Haynes® 230®.

De préférence encore, le soufflet est en acier ferritique à environ 20% de chrome, de préférence à base d'Inconel® 625 ou Haynes® 230®.

L'invention concerne également un procédé de fonctionnement d'un module d'électrolyse ou de co-électrolyse EHT qui vient d'être décrit selon lequel :
- on alimente les conduits d'amenée du piston en vapeur d'eau ou en mélange de vapeur d'eau et un autre gaz choisi parmi le dioxyde de carbone et le dioxyde d'azote;
- lors de la montée en pression au sein du réacteur, on ajuste l'effort de compression appliqué par le piston sur le ou les éléments de contact électrique ;
- on récupère l'hydrogène ou l'hydrogène et le monoxyde de carbone ou d'azote produit(s) par électrolyse ou co-électrolyse de la vapeur d'eau.

Selon un mode de réalisation avantageux, on alimente les conduits d'amenée du deuxième interconnecteur en gaz drainant, tel que l'air, la pression du gaz drainant amené étant sensiblement égale à celle de la vapeur d'eau ou du mélange de vapeur d'eau et de l'autre gaz et on récupère l'oxygène produit.

L'invention concerne enfin un procédé de fonctionnement d'un module de pile à combustible SOFC décrit précédemment, selon lequel :
- on alimente les conduits d'amenée du piston en combustible, tel que l'hydrogène ou du méthane;
- on alimente les conduits d'amenée du deuxième interconnecteur en air ou oxygène, la pression du combustible et de l'air ou oxygène amenés étant sensiblement égale à celle de l'hydrogène ou du méthane;
- lors de la montée en pression au sein de la pile, on ajuste l'effort de compression appliqué par le piston sur le ou les éléments de contact électrique ;
- on récupère le surplus de combustible, l'eau produite d'une part et le surplus d'air ou d'oxygène d'autre part, dans leur conduit de récupération respectif.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique montrant le principe de fonctionnement d'un électrolyseur d'eau à haute température,
- la figure 2 est une vue schématique en éclaté d'une partie d'un électrolyseur de vapeur d'eau à haute température (EHT) de type SOEC comprenant des interconnecteurs selon l'état de l'art,
- la figure 3 est une vue en éclaté d'un mode de réalisation d'un module selon la demande de brevet WO2016/096752 pour un réacteur EHT,
- la figure 4 est une vue en coupe d'un module assemblé selon la figure 3, la coupe étant réalisée respectivement dans le plan de circulation du gaz d'équilibrage,
- les figures 5 et 6 sont des vues en coupe d'un module assemblé selon la figure 3, la coupe étant réalisée respectivement dans le plan de circulation de la vapeur d'eau amenée et de l'hydrogène produit, et dans le plan de circulation de l'air amené et l'oxygène produit,
- la figure 7 est une vue en coupe trois-quarts et en éclaté d'un mode de réalisation d'un module selon l'invention pour réacteur d'électrolyse EHT à empilement,
- la figure 8 est une vue en coupe d'un soufflet d'étanchéité mis en œuvre dans un module selon l'invention,
- la figure 9 est une vue en coupe d'un module selon l'invention assemblé selon la figure 7, la coupe étant réalisée dans le plan de circulation de la vapeur d'eau amenée et de l'hydrogène produit,
- la figure 10 est une vue en coupe d'un module selon l'invention assemblé selon la figure 7, la coupe étant réalisée dans le plan de circulation de l'air amené et l'oxygène produit,
- la figure 11 est une vue en perspective d'un module selon l'invention assemblé selon la figure 7, montrant localement le passage de l'alimentation de la vapeur d'eau entre les deux interconnecteurs.

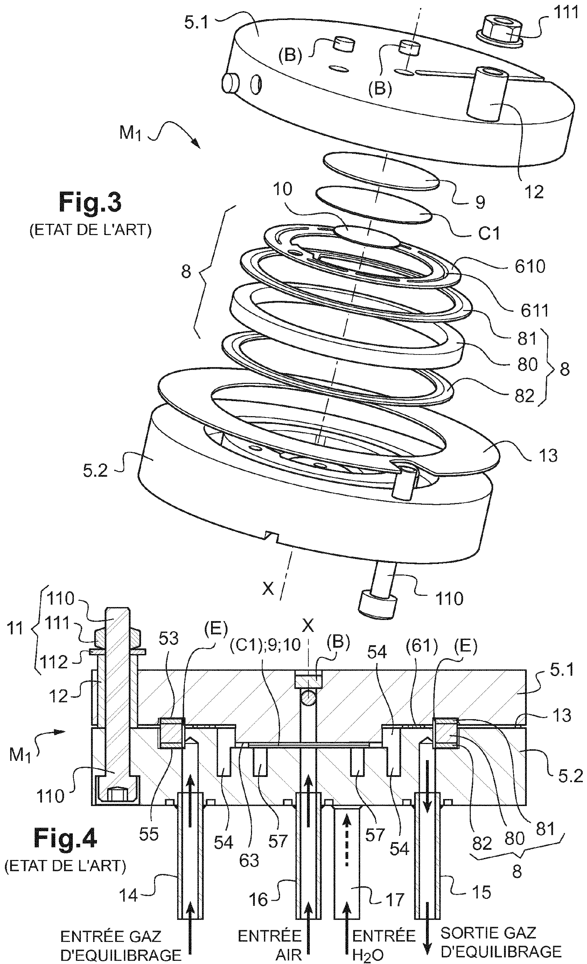

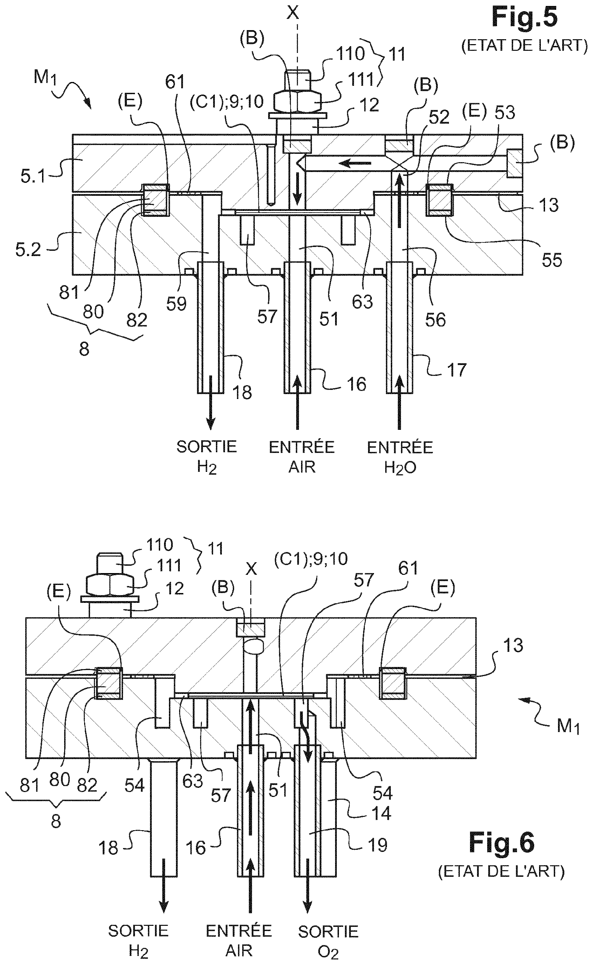

Les figures 1 à 6 relatives à l'état de l'art ont déjà été commentées en préambule. Elles ne sont donc pas détaillées ci-après.

Par souci de clarté, les mêmes éléments d'un module M1 de réacteur d'électrolyse EHT selon la demande de brevet WO2016/096752 et d'un module M1 réacteur d'électrolyse EHT selon l'invention sont désignés par les mêmes références numériques.

On précise ici dans l'ensemble de la présente demande, les termes « inférieur », « supérieur », « dessus », « dessous », « intérieur », « extérieur », « « interne » « externe» sont à comprendre par référence à un interconnecteur selon l'invention en vue de coupe transversale selon l'axe de symétrie X.

On précise également que le module d'électrolyseurs ou de piles à combustible décrits sont de type à oxydes solides (SOEC, acronyme anglais de « *Solid Oxyde Electrolyte Cell* » ou SOFC, acronyme anglais de « *Solid Oxide Fuel Cell* ») fonctionnant à haute température.

Ainsi, tous les constituants (anode/électrolyte/cathode) d'une cellule d'électrolyse ou de pile sont des céramiques.

La haute température de fonctionnement d'un électrolyseur (réacteur d'électrolyse) ou d'une pile est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 1 ci-dessous.

**TABLEAU 1**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ωm | 0,42 |

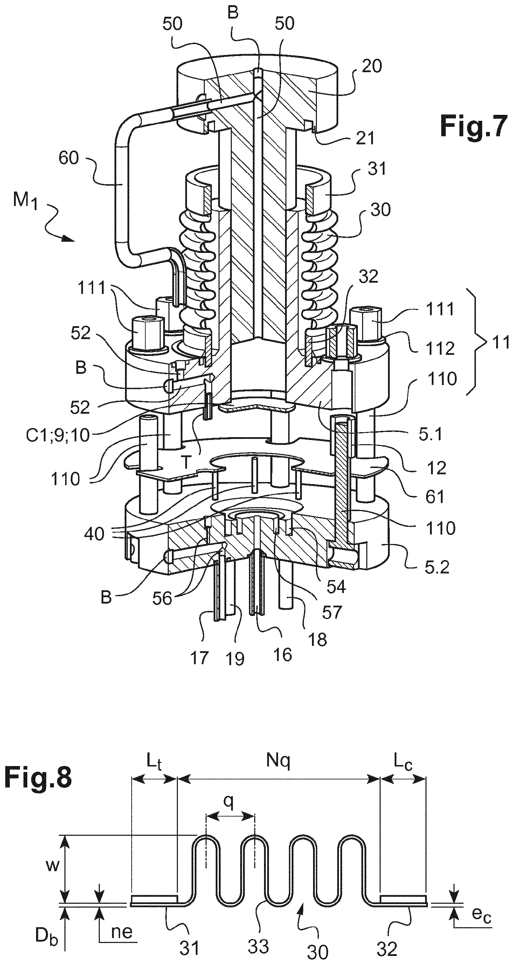

La figure 7 montre en vue de coupe schématique un module M1 destiné à former le motif élémentaire d'un électrolyseur de vapeur d'eau EHT conforme à l'invention.

On ne décrit pas ici l'ensemble des éléments communs au module M1 de la demande de brevet WO2016/096752 et celui selon l'invention, qui sont parfaitement reconnaissables sur l'ensemble des figures 1 à 11.

Le module M1 comprend un piston d'écrasement 20 monté coulissant à l'intérieur de l'interconnecteur supérieur 5.1. Ce piston est percé du conduit d'amenée centrale 50 de la vapeur d'eau sur la cellule C1.

Une masse gravitaire ou un vérin non représentés peut venir appliquer sur le piston 20 un effort de compression vertical vers le bas. Cet effort de compression va être ajusté lors de la montée en pression au sein du module afin de reprendre l'effet de fond dû à la pression. En effet, la pression en fonctionnement va générer un effort de desserrage d'une valeur F égale à la pression multipliée par la surface du disque sur lequel s'applique la pression. Ainsi, cet effort de desserrage doit être compensé par la valeur de compensation sinon le piston 20 ne vient pas écraser correctement les grilles de contact 9, 10.

L'interconnecteur supérieur 5.1 et l'interconnecteur inférieur 5.2 sont chacun percé d'un conduit d'amenée latéral de vapeur d'eau 52, 56. Ces deux conduits d'amenée latérale sont reliés entre deux par un tube de raccord T isolant électriquement.

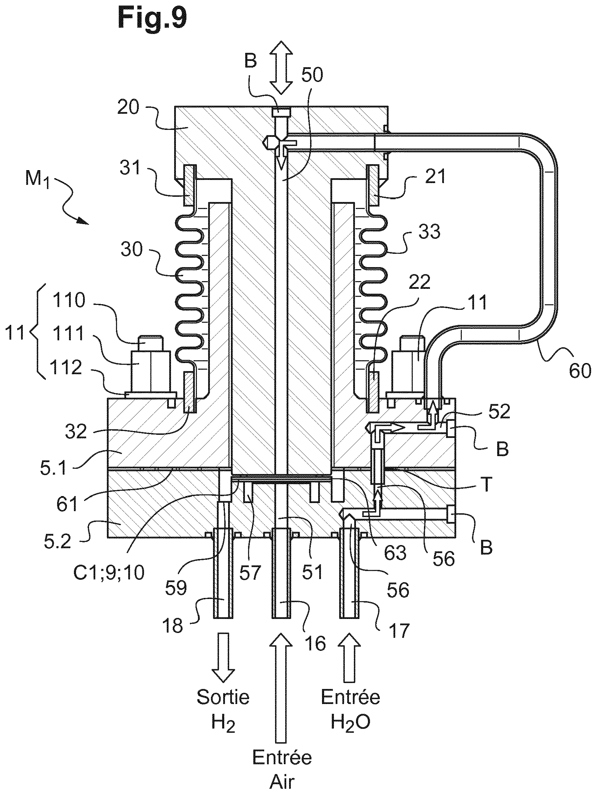

Un tuyau 60 agencé à l'extérieur du module relie le conduit d'amenée latéral 52 de l'interconnecteur supérieur au conduit d'amenée central 50 du piston (Figure 9).

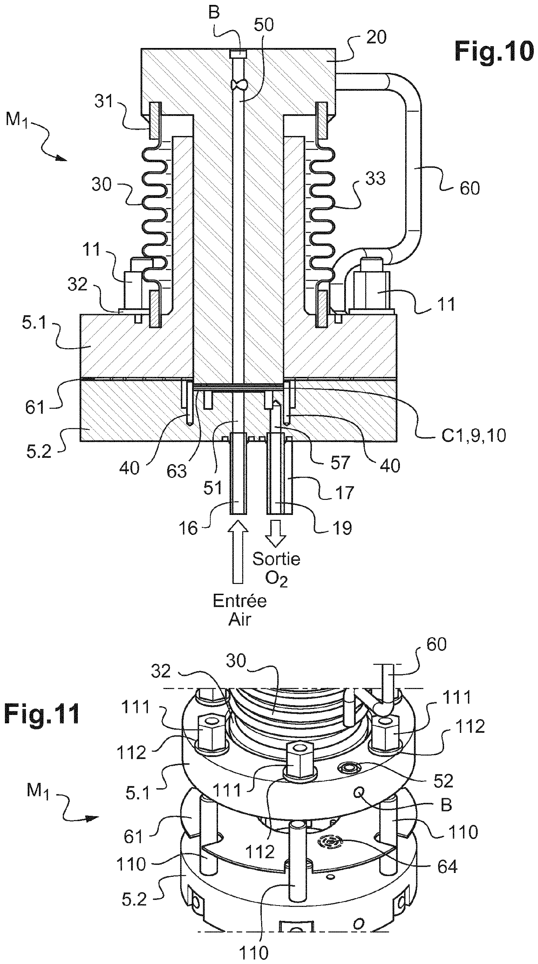

Lors d'une montée en pression du module M1, le piston 20, dont l'effort est assuré par la masse gravitaire ou un vérin. Les pions 40 permettent d'effectuer le centrage de la cellule, afin que le piston vienne écraser les grilles de contact électrique 9, 10 de part et d'autre de la cellule C1 (figure 10).

Un soufflet 30 en Inconel® 625 ou en Haynes® 230 est assemblé par son extrémité supérieure 31 au piston 20 et par son extrémité inférieure 32 à l'interconnecteur supérieur 5.1. Comme cela est visible en figure 9, chaque extrémité 31, 32 du ressort 30 peut être insérées dans une gorge périphérique 21, 22 respectivement du piston 20 et de l'interconnecteur 5.1. L'assemblage des extrémités 31, 32 à chacun des deux composants métalliques 20, 5.1 est de préférence réalisé par soudage, notamment par procédé TIG. Tout autre moyen d'assemblage peut convenir.

Le soufflet 30 va permettre de contenir la pression à l'intérieure du module élémentaire, mais aussi de se déformer verticalement sous l'effet de compression appliqué par et sur le piston 20.

On veille à ce que le soufflet 30 soit tout d'abord dimensionné pour tenir la pression et la température nominale de fonctionnement au sein du module. Une autre contrainte du ressort de compensation est de posséder une rigidité suffisamment faible pour pouvoir encaisser les dilatations et ne pas nécessiter trop d'effort sur le piston.

Les inventeurs ont trouvé qu'un soufflet 30 avec une rigidité linéaire inférieure à 300N/mm donnait satisfaction.

Les inventeurs ont dimensionné un soufflet 30 comme montré en figure 8, comprenant deux extrémités chacune sous la forme d'une manchette avec ceinture 31 et 32 et une portion centrale 33 sous la forme d'ondes régulières. Les deux extrémités 31, 32 ont donc une ceinture qui permet de souder le soufflet 30, respectivement au piston 20 et à l'interconnecteur supérieur 5.1.

Le dimensionnement a été réalisé en supposant un nombre de cycle thermique réduit d'un module M1 avec une pression nominale fixée à 10bars, et une température nominale de fonctionnement à 800°C.

A titre indicatif, les caractéristiques dimensionnelles d'un soufflet 30 en Inconel® 625 sont indiquées dans le tableau 2 ci-dessous.

**TABLEAU 2**

| | |
|---|---|
| n nombre de couches | 2 |
| N nombre d'ondes | 6 |
| E module d'Young | 150000 Mpa |
| v module de Poisson | 0,3 |
| Dm diamètre moyen des ondes 33 | 61,8 mm |
| Db diamètre intérieur | 54 mm |
| e épaisseur tôle initiale du soufflet | 0,4 mm |
| w hauteur des ondes | 7 mm |
| q distance entre deux ondes consécutives | 9 mm |
| Lc longueur manchette 32 | 14 mm |
| Ec épaisseur manchette 32 | 3,6 mm |
| Lt longueur manchette 31 | 15 mm |

Une rondelle ou couronne en mica 61 est prise en sandwich entre l'interconnecteur 5.1 et l'interconnecteur 5.2 et comprimé par le biais de systèmes vis/écrou ou boulons 11, afin de garantir l'étanchéité en pression du module M1 (Figures 7 et 9). Les boulons 11 permettent ainsi à la fois d'assembler les interconnecteurs 5.1, 5.2 et de comprimer la rondelle en mica 61.

Comme visible sur la figure 9, à l'état serré, les rondelles 112 des systèmes vis-écrous 11 viennent en appui contre la surface supérieure de l'interconnecteur supérieur 5.1. Typiquement, un effort par boulons de 2 N/m est appliqué.

Un système vis-écrou 11 est réalisé de préférence dans la même matière que celle des interconnecteurs 5.1, 5.2 et piston 20. Les rondelles 112 et bagues 12 autour de chaque vis 110 sont isolantes électriquement afin de garantir l'isolation électrique entre les deux interconnecteurs.

Comme visible en figure 11, la couronne de mica 61 est percée d'un trou de passage du tube de raccord T de la vapeur d'eau provenant du conduit 56 de l'interconnecteur inférieur 5.2. Autour de ce trou de passage, un joint supplémentaire 64 en vitrocéramique est réalisé afin de garantir l'étanchéité du passage de la vapeur d'eau, ce qui permet donc la réalisation de l'étanchéité en pression du module et isole le tube T. Le tube T est aussi isolant électrique, typiquement en céramique.

On décrit maintenant le fonctionnement d'un réacteur d'électrolyse EHT comprenant plusieurs modules selon l'invention qui viennent d'être décrits, les modules étant empilés les uns sur les autres, comme celui représenté aux figures 7 à 11.

On alimente le tuyau 17 en vapeur d'eau sous pression et donc les conduits d'amenée en vapeur d'eau 56, 52 et 50.

Simultanément, on alimente le tuyau 16 en air, en tant que gaz drainant, et donc le conduit d'amenée 51, la pression de l'air amené étant sensiblement égale à celle de la vapeur d'eau.

Lors de la montée en pression, on ajuste la pression du piston 20 sur les couches de contact électrique.

La vapeur d'eau est distribuée radialement respectivement par la gorge 56, le tuyau de raccord T, la gorge 52, puis le tuyau 60 puis arrive dans le conduit d'amenée central 50 (figure 9).

L'hydrogène produit par l'électrolyse de la vapeur d'eau, circule dans la gorge annulaire 54 puis est récupéré radialement dans le conduit de récupération 59 et donc par le tuyau de récupération 18.

L'air distribué radialement depuis le conduit d'amenée 51 et l'oxygène produit par l'électrolyse de la vapeur d'eau circule radialement dans la gorge annulaire 57 puis est récupéré par le tuyau de récupération 19.

L'isolation électrique entre l'interconnecteur 5.2 d'une part et l'ensemble formé par l'interconnecteur 5.1 et le piston 20 sont isolés électriquement par la rondelle mica 61, les bagues 12, les rondelles 112, et le tube T qui sont tous en matériau isolant électrique, de préférence en céramique.

Donc, l'interconnecteur 5.2 avec ses périphériques, c'est-à-dire ses tubes d'amenés de gaz, est mis à la masse, et n'a aucune liaison électrique avec l'interconnecteur 5.1 et ses périphériques, c'est-à-dire les le piston 20, le soufflet 30, et le tuyau 60.

D'autres variantes et avantages de l'invention peuvent être réalisés sans pour autant sortir du cadre de l'invention.

Par exemple, on peut prévoir de percer l'un ou l'autre des deux interconnecteurs d'un module pour y faire passer des moyens d'instrumentation, tels qu'un thermocouple.

Bien que décrite pour une électrolyse de l'eau à haute température, le module M1 selon l'invention peut tout aussi bien être utilisé pour une co-électrolyse de vapeur d'eau mélangée soit avec du dioxyde de carbone soit du dioxyde d'azote.

Bien que décrite pour une électrolyse de l'eau à haute température, le module M1 selon l'invention peut tout aussi bien être utilisé en tant que pile à combustible SOFC. Dans ce cas, on alimente les tuyaux d'amenée 17 en combustible, par exemple en hydrogène ou méthane, et on alimente les tuyaux 16 en air ou en oxygène.

L'invention n'est pas limitée aux exemples qui viennent d'être décrits ; on peut notamment combiner entre elles des caractéristiques des exemples illustrés au sein de variantes non illustrées.

## Revendications

1. Module, destiné à former un motif élémentaire d'un réacteur d'électrolyse ou de co-électrolyse de type SOEC, comprenant:
- une cellule (C1) électrochimique élémentaire formée d'une cathode (2.1), d'une anode (4.1), et d'un électrolyte (3.1) intercalé entre la cathode et l'anode,
- un premier (5.1) et un deuxième (5.2) dispositif formant chacun un interconnecteur électrique et fluidique, constitué chacun d'un composant en matériau conducteur électronique et étanche aux gaz; les premier et deuxième interconnecteurs étant agencés de part et d'autre de la cellule élémentaire; le deuxième interconnecteur (5.2) étant percé d'un conduit de récupération de l'hydrogène produit (59), débouchant à la périphérie de la cellule du côté de la cathode; le deuxième interconnecteur (5.2) étant percé d'un conduit de récupération de l'oxygène produit (57), débouchant à la périphérie de la cellule du côté de l'anode (4.1) de sorte à réaliser une distribution homogène de l'oxygène produit jusqu'au conduit de récupération;
- un premier joint d'étanchéité (61) et isolant électrique, agencé à la périphérie de la cellule élémentaire et en appui à la fois contre le premier interconnecteur et contre le deuxième interconnecteur;
- un deuxième joint d'étanchéité (63), agencé à la périphérie de l'anode de la cellule élémentaire et en appui à la fois contre le deuxième interconnecteur et contre l'électrolyte ; le deuxième joint d'étanchéité étant à base de verre et/ou de vitrocéramique ;
- des moyens mécaniques d'assemblage (11) des interconnecteurs entre eux adaptés pour serrer par compression le premier joint d'étanchéité ;
- au moins un élément de contact électrique (9, 10), agencé entre une des électrodes et l'un des interconnecteurs ;
- un piston d'écrasement (20) comprenant un composant en matériau conducteur électronique et étanche aux gaz, le piston étant monté coulissant à l'intérieur du premier interconnecteur, le piston étant adapté pour venir écraser le(s) élément(s) de contact électrique; l'effort de compression du piston étant ajusté lors de la montée en pression de la vapeur d'eau et de l'hydrogène produit à l'intérieur du module ; le piston d'écrasement étant percé d'un conduit d'amenée de la vapeur d'eau (50), débouchant sur la cellule du côté de la cathode (2.1) de sorte à réaliser une distribution homogène respectivement de la vapeur d'eau amenée et de l'hydrogène produit, depuis le conduit d'amenée jusqu'au conduit de récupération et,
- un soufflet d'étanchéité (30), assemblé par l'une de ses extrémités au piston et par l'autre de ses extrémités au premier interconnecteur ; le soufflet étant adapté à la fois pour contenir la pression de la vapeur d'eau et de l'hydrogène produit à l'intérieur du module et pour se déformer selon la direction de déplacement du piston.

2. Module selon la revendication 1, le deuxième interconnecteur (5.2) étant percé d'un conduit d'amenée de gaz drainant (51), tel que l'air, sur la cellule du côté de l'anode de sorte à réaliser une distribution homogène respectivement du gaz drainant amené et de l'oxygène produit, depuis le conduit d'amenée (51) jusqu'au conduit de récupération (57).

3. Module, destiné à former un motif élémentaire d'une pile à combustible de type SOFC, comprenant:
- une cellule (C1) électrochimique élémentaire formée d'une cathode (2), d'une anode (4), et d'un électrolyte (3) intercalé entre la cathode et l'anode,
- un premier (5.1) et un deuxième (5.2) dispositif formant chacun un interconnecteur électrique et fluidique, constitué chacun d'un composant en matériau conducteur électronique et étanche aux gaz ; les premier et deuxième interconnecteur étant agencés de part et d'autre de la cellule élémentaire ; le deuxième interconnecteur (5.2) étant percé d'un conduit de récupération de l'eau produite (59), à la périphérie de la cellule du côté de l'anode; le deuxième interconnecteur (5.2) étant percé d'un conduit d'amenée (51) d'air ou d'oxygène, débouchant sur la cellule du côté de la cathode (2.1) et, d'un conduit de récupération du surplus d'air ou d'oxygène, débouchant à la périphérie de la cellule du côté de la cathode de sorte à réaliser une distribution homogène de l'air ou de l'oxygène, depuis le conduit d'amenée jusqu'au conduit de récupération;
- un premier joint d'étanchéité (61) et isolant électrique, agencé à la périphérie de la cellule élémentaire et en appui à la fois contre le premier interconnecteur et contre le deuxième interconnecteur;
- un deuxième joint d'étanchéité (63), agencé à la périphérie de la cathode de la cellule élémentaire et en appui à la fois contre le deuxième interconnecteur et contre l'électrolyte ; le deuxième joint d'étanchéité étant à base de verre et/ou de vitrocéramique ;
- des moyens mécaniques d'assemblage (11) des interconnecteurs entre eux adaptés pour serrer par compression le premier joint d'étanchéité ;
- au moins un élément de contact électrique (9, 10), agencé entre une des électrodes et l'un des interconnecteurs ;
- un piston d'écrasement (20) comprenant un composant en matériau conducteur électronique et étanche aux gaz, le piston étant monté coulissant à l'intérieur du premier interconnecteur, le piston étant adapté pour venir écraser le(s) élément(s) de contact électrique; l'effort de compression du piston étant ajusté lors de la montée en pression du combustible et de l'eau produite à l'intérieur du module; le piston d'écrasement étant percé d'un conduit d'amenée de combustible (50), débouchant sur la cellule du côté de l'anode (4.1) de sorte à réaliser une distribution homogène respectivement du combustible amené et de l'eau produite, depuis le conduit d'amenée jusqu'au conduit de récupération et,
- un soufflet d'étanchéité (30), assemblé par l'une de ses extrémités au piston et par l'autre de ses extrémités au premier interconnecteur ; le soufflet étant adapté à la fois pour contenir la pression du combustible et de l'eau produite à l'intérieur du module et pour se déformer selon la direction de déplacement du piston.

4. Module selon l'une des revendications précédentes, le premier joint d'étanchéité étant constitué d'une rondelle ou couronne en mica.

5. Module selon l'une des revendications précédentes, comprenant deux éléments de contact électrique, de préférence des grilles métalliques (9, 10), dont l'un entre l'une (2.1) des électrodes et l'un des interconnecteurs (5.1) et l'autre (10) entre l'autre (4.1) des électrodes et l'autre des interconnecteurs (5.2).

6. Module selon l'une des revendications précédentes, le premier et/ ou le deuxième interconnecteur comprenant une première gorge (54) réalisée entre le premier joint (61) et la cellule (C1), le conduit d'amenée (50) du premier interconnecteur étant en communication avec la première gorge (54) de sorte à réaliser la distribution homogène de la vapeur d'eau amenée et de l'hydrogène produit ou du combustible amené et de l'eau produite, jusqu'au conduit de récupération du premier interconnecteur.

7. Module selon l'une des revendications précédentes, le deuxième interconnecteur (5.2) comprenant une deuxième gorge (57) réalisée à l'intérieur d'une zone délimitée par le deuxième joint (63), le conduit d'amenée (51) du deuxième interconnecteur étant en communication avec la deuxième gorge (57) de sorte à réaliser la distribution homogène de l'oxygène produit ou de l'air amené, jusqu'au conduit de récupération (57) du deuxième interconnecteur.

8. Module selon l'une des revendications précédentes, dans lequel :
- les premier et deuxièmes interconnecteur sont percés chacun d'un conduit supplémentaire d'amenée (52, 56) de vapeur d'eau ou de combustible ; les deux conduits supplémentaires d'amenée étant reliés entre eux par l'intermédiaire d'une tube de raccord (T) isolant électrique ; le conduit supplémentaire d'amené (52) du premier interconnecteur (5.1) étant relié au conduit d'amenée (50) percé dans le piston (20) par un tuyau (60) à l'extérieur du module;
- le premier joint (61) intègre en son sein un troisième joint d'étanchéité (64) à l'intérieur duquel est logé le tube de raccord (T).

9. Module selon l'une des revendications précédentes, la cellule électrochimique élémentaire (C1), les premier (5.1) et deuxième (5.2) interconnecteurs, les premier (61) et deuxième (63) joints d'étanchéité, le piston (20) et le soufflet (30) étant de forme axisymétrique autour d'un axe central (X), les conduits d'amenée de gaz réactifs (50) (vapeur d'eau ou de combustible) et (51) (gaz drainant (51), tel que l'air, ou d'air ou oxygène) débouchant selon l'axe central (X).

10. Module selon l'une des revendications précédentes, le composant métallique du premier et/ou le deuxième interconnecteur et/ou le piston étant en acier ferritique à environ 20% de chrome, de préférence en CROFER® 22APU ou le F18TNb, ou à base Nickel de type Inconel® 600 ou Haynes® 230®.

11. Module selon l'une des revendications précédentes, le soufflet étant en acier ferritique à environ 20% de chrome, de préférence à base d'Inconel® 625 ou Haynes® 230®.

12. Procédé de fonctionnement d'un module (M1) d'électrolyse ou de co-électrolyse EHT selon l'une des revendications 1 à 2 et 4 à 12, selon lequel :
- on alimente les conduits d'amenée (50) du piston (20) en vapeur d'eau ou en mélange de vapeur d'eau et un autre gaz choisi parmi le dioxyde de carbone et le dioxyde d'azote;
- lors de la montée en pression au sein du réacteur, on ajuste l'effort de compression appliqué par le piston sur le ou les éléments de contact électrique ;
- on récupère l'hydrogène ou l'hydrogène et le monoxyde de carbone ou d'azote produit(s) par électrolyse ou co-électrolyse de la vapeur d'eau.

13. Procédé de fonctionnement selon la revendication 12, selon lequel on alimente les conduits d'amenée (51) du deuxième interconnecteur (5.2) en gaz drainant, tel que l'air, la pression du gaz drainant amené étant sensiblement égale à celle de la vapeur d'eau ou du mélange de vapeur d'eau et de l'autre gaz et on récupère l'oxygène produit.

14. Procédé de fonctionnement d'un module (M1) de pile à combustible SOFC selon l'une des revendications 3 à 12, selon lequel :
- on alimente les conduits d'amenée du piston en combustible, tel que l'hydrogène ou du méthane;
- on alimente les conduits d'amenée du deuxième interconnecteur en air ou oxygène, la pression du combustible et de l'air ou oxygène amenés étant sensiblement égale à celle de l'hydrogène ou du méthane;
- lors de la montée en pression au sein de la pile, on ajuste l'effort de compression appliqué par le piston sur le ou les éléments de contact électrique ;
- on récupère le surplus de combustible, l'eau produite d'une part et le surplus d'air ou d'oxygène d'autre part, dans leur conduit de récupération respectif.

## Patentansprüche

1. Modul, das dazu bestimmt ist, eine elementare Einheit eines Elektrolyse- oder Co-Elektrolyse-Reaktors des SOEC-Typs zu bilden, das Folgendes umfasst:
- eine elementare elektrochemische Zelle (C1), die aus einer Katode (2.1), einer Anode (4.1) und einem Elektrolyt (3.1), der zwischen die Katode und die Anode eingefügt ist, gebildet ist;
- eine erste Vorrichtung (5.1) und eine zweite Vorrichtung (5.2), die jeweils einen elektrischen und fluidtechnischen Verbinder bilden, der aus einer Komponente aus einem elektrisch leitenden und gasdichten Material gebildet ist; wobei der erste und der zweite Verbinder beiderseits der elementaren Zelle angeordnet sind; wobei der zweite Verbinder (5.2) von einer Leitung (59) für die Wiedergewinnung von produziertem Wasserstoff, die in den Umfang der Zelle auf Seiten der Katode mündet, durchquert wird; wobei der zweite Verbinder (5.2) von einer Leitung (57) für die Wiedergewinnung von produziertem Sauerstoff, die in den Umfang der Zelle auf Seiten der Anode (4.1) mündet, durchquert wird, derart, dass eine homogene Verteilung von produziertem Sauerstoff bis zu der Wiedergewinnungsleitung verwirklicht wird;
- eine erste Dichtung (61), die elektrisch isolierend ist, am Umfang der elementaren Zelle angeordnet ist und sich sowohl an dem ersten Verbinder als auch an dem zweiten Verbinder abstützt;
- eine zweite Dichtung (63), die am Umfang der Anode der elementaren Zelle angeordnet ist und sich sowohl an dem zweiten Verbinder als auch an dem Elektrolyt abstützt; wobei die zweite Dichtung auf Glasbasis und/oder vitrokeramischer Basis hergestellt ist;
- mechanische Mittel (11) für die gegenseitige Zusammenfügung der Verbinder, um die erste Dichtung durch Kompression einzuklemmen;
- wenigstens ein Element (9, 10) für elektrischen Kontakt, das zwischen einer der Elektroden und einem der Verbinder angeordnet ist;
- einen Quetschkolben (20), der eine Komponente aus einem elektrisch leitenden und gasdichten Material enthält, wobei der Kolben im Inneren des ersten Verbinders gleitend montiert ist, wobei der Kolben dafür ausgelegt ist, das eine oder die mehreren Elemente für elektrischen Kontakt zu quetschen; wobei die Kompressionskraft des Kolbens während des Druckanstiegs des Wasserdampfs und des Wasserstoffs, der im Inneren des Moduls erzeugt wird, eingestellt wird; wobei der Quetschkolben von einer Wasserdampf-Zufuhrleitung (50), die in die Zelle auf Seiten der Katode (2.1) mündet, durchquert wird, derart, dass eine homogene Verteilung des zugeführten Wasserdampfs bzw. des erzeugten Wasserstoffs von der Zufuhrleitung bis zu der Wiedergewinnungsleitung verwirklicht wird; und
- eine Balgabdichtung (30), die zwischen einem ihrer Enden und dem Kolben und dem anderen ihrer Enden und dem ersten Verbinder ausgebildet ist; wobei der Balg sowohl dafür ausgelegt ist, den Druck des Wasserdampfs und des erzeugten Wasserstoffs im Inneren des Moduls zu halten, als auch dafür, sich in Richtung der Verlagerung des Kolben zu verformen.

2. Modul nach Anspruch 1, wobei der zweite Verbinder (5.2) von einer Zufuhrleitung (51) von Abführgas wie etwa Luft zu der Zelle auf Seiten der Anode durchquert wird, derart, dass eine homogene Verteilung des zugeführten Abführgases und von erzeugtem Sauerstoff von der Zufuhrleitung (51) bis zu der Wiedergewinnungsleitung (57) verwirklicht wird.

3. Modul, das dazu bestimmt ist, eine elementare Einheit einer Brennstoffzelle des SOFC-Typs zu bilden, das Folgendes umfasst:
- eine elementare elektrochemische Zelle (C1), die aus einer Katode (2), einer Anode (4) und einem Elektrolyt (3), der zwischen die Katode und die Anode eingefügt ist, gebildet ist;
- eine erste Vorrichtung (5.1) und eine zweite Vorrichtung (5.2), die jeweils einen elektrischen und fluidtechnischen Verbinder bilden, der jeweils aus einem elektrisch leitenden und gasdichten Material gebildet ist; wobei der erste und der zweite Verbinder beiderseits der elementaren Zelle angeordnet sind; wobei der zweite Verbinder (5.2) von einer Leitung (59) für die Wiedergewinnung von erzeugtem Wasser zum Umfang der Zelle auf Seite der Anode durchquert wird; wobei der zweite Verbinder (5.2) von einer Zufuhrleitung (51) für Luft oder Sauerstoff, die in die Zelle auf Seiten der Katode (2.1) mündet, und von einer Leitung für die Wiedergewinnung von überschüssiger Luft oder überschüssigem Sauerstoff, die in den Umfang der Zelle auf Seiten der Katode mündet, durchquert wird, derart, dass eine homogene Verteilung von Luft oder von Sauerstoff von der Zufuhrleitung bis zu der Wiedergewinnungsleitung verwirklicht wird;
- eine erste Dichtung (61), die elektrisch isolierend ist, am Umfang der elementaren Zelle angeordnet ist und sich sowohl an dem ersten Verbinder als auch an dem zweiten Verbinder abstützt;
- eine zweite Dichtung (63), die am Umfang der Katode der elementaren Zelle angeordnet ist und sich sowohl an dem zweiten Verbinder als auch an dem Elektrolyt abstützt; wobei die zweite Dichtung auf Glasbasis und/oder vitrokeramischer Basis hergestellt ist;
- mechanische Mittel (11) für die gegenseitige Zusammenfügung der Verbinder, um die erste Dichtung durch Kompression zu quetschen;
- wenigstens ein Element (9, 10) für elektrischen Kontakt, das zwischen einer der Elektroden und einem der Verbinder angeordnet ist;
- einen Quetschkolben (20), der eine Komponente aus einem elektrisch leitenden und gasdichten Material enthält, wobei der Kolben im Inneren des ersten Verbinders gleitend montiert ist, wobei der Kolben dafür ausgelegt ist, das eine oder die mehreren Elemente für elektrischen Kontakt zu quetschen; wobei die Kompressionskraft des Kolbens während des Druckanstiegs des Brennstoffs und des Wassers, das im Inneren des Moduls erzeugt wird, eingestellt wird; wobei der Quetschkolben von einer Brennstoff-Zufuhrleitung (50), die in die Zelle auf Seiten der Anode (4.1) mündet, durchquert wird, derart, dass eine homogene Verteilung des zugeführten Brennstoffs bzw. des erzeugten Wassers von der Zufuhrleitung bis zu der Wiedergewinnungsleitung verwirklicht wird, und
- eine Balgabdichtung (20), die an einem ihrer Enden mit dem Kolben und am anderen ihrer Enden mit dem ersten Verbinder zusammengefügt ist; wobei der Balg sowohl dafür ausgelegt ist, den Druck des Brennstoffs und des erzeugten Wassers im Inneren des Moduls zu halten, als auch dafür, sich in Richtung der Verlagerung des Kolben zu verformen.

4. Modul nach einem der vorhergehenden Ansprüche, wobei die erste Dichtung aus einer Scheibe oder einem Kranz aus Mika gebildet ist.

5. Modul nach einem der vorhergehenden Ansprüche, das zwei Elemente für elektrischen Kontakt, vorzugsweise Metallgitter (9, 10), enthält, eines zwischen einer (2.1) der Elektroden und einem der Verbinder (5.1) und das andere (10) zwischen der anderen (4.1) der Elektroden und dem anderen der Verbinder (5.2).

6. Modul nach einem der vorhergehenden Ansprüche, wobei der erste und/oder der zweite Verbinder eine erste Kehle (54) aufweist, die zwischen der ersten Dichtung (61) und der Zelle (C1) verwirklicht ist, wobei die Zufuhrleitung (50) des ersten Verbinders mit der ersten Kehle (54) in Kommunikation ist, derart, dass die homogene Verteilung des Wasserdampfs und des erzeugten Wasserstoffs oder des zugeführten Brennstoffs und des erzeugten Wassers bis zu der Wiedergewinnungsleitung des ersten Verbinders verwirklicht wird.

7. Modul nach einem der vorhergehenden Ansprüche, wobei der zweite Verbinder (5.2) eine zweite Kehle (57) enthält, die im Inneren einer Zone, die durch die zweite Dichtung (63) begrenzt ist, verwirklicht ist, wobei die Zufuhrleitung (51) des zweiten Verbinders mit der zweiten Kehle (57) in Kommunikation ist, derart, dass die homogene Verteilung des erzeugten Sauerstoffs und der zugeführten Luft bis zu der Wiedergewinnungsleitung (57) des zweiten Verbinders verwirklicht wird.

8. Modul nach einem der vorhergehenden Ansprüche, wobei:
- der erste und der zweite Verbinder jeweils von einer zusätzlichen Zufuhrleitung (52, 56) für Wasserdampf oder Brennstoff durchquert werden; wobei die beiden zusätzlichen Zufuhrleitungen über ein elektrisch isolierendes Verbindungsrohr (T) miteinander verbunden sind; wobei die zusätzliche Zufuhrleitung (52) des ersten Verbinders (5.1) mit der den Kolben (20) durchquerenden Zufuhrleitung (50) durch eine Röhre (60) außerhalb des Moduls verbunden ist;
- die erste Dichtung (61) in ihrem Inneren eine dritte Dichtung (64) enthält, in der das Verbindungsrohr (T) untergebracht ist.

9. Modul nach einem der vorhergehenden Ansprüche, wobei die elementare elektrochemische Zelle (C1), der erste Verbinder (5.1) und der zweite Verbinder (5.2), die erste Dichtung (61) und die zweite Dichtung (63), der Kolben (20) und der Balg (30) achsensymmetrisch um eine Mittelachse (X) ausgebildet sind, wobei die Zufuhrleitungen für reaktive Gase (50) (Wasserdampf oder Brennstoff) und (51) (Abführgas (51), etwa Luft, oder Luft oder Sauerstoff) in Richtung der Mittelachse (X) münden.

10. Modul nach einem der vorhergehenden Ansprüche, wobei die metallische Komponente des ersten und/oder des zweiten Verbinders und/oder des Kolbens aus Ferritstahl mit etwa 20 % Chrom, vorzugsweise CROFER® 22APU oder F18TNb oder auf Nickelbasis des Typs Inconel® 600 oder Haynes® 230® hergestellt sind.

11. Modul nach einem der vorhergehenden Ansprüche, wobei der Balg aus Ferritstahl mit etwa 20 % Chrom, vorzugsweise auf Basis von Inconel® 625 oder Haynes® 230® hergestellt ist.

12. Verfahren zum Betreiben eines Elektrolyse- oder Co-Elektrolyse-Moduls EHT (M1) nach einem der Ansprüche 1 bis 2 und 4 bis 12, das Folgendes umfasst:
- Versorgen der Zufuhrleitungen (50) des Kolbens (20) mit Wasserdampf oder mit einem Gemisch aus Wasserdampf und einem anderen Gas, das aus Kohlenstoffdioxid und Stickstoffdioxid gewählt ist;
- während des Druckanstiegs im Inneren des Reaktors Einstellen der Kompressionskraft, die durch den Kolben auf das eine oder die mehreren Elemente für elektrischen Kontakt ausgeübt wird;
- Wiedergewinnen von Wasserstoff oder von Wasserstoff und Kohlenstoffmonoxid oder Stickstoffmonoxid, die durch Elektrolyse oder Co-Elektrolyse von Wasserdampf erzeugt werden.

13. Betriebsverfahren nach Anspruch 12, wobei die Zufuhrleitungen (51) des zweiten Verbinders (5.2) mit Abführgas wie etwa Luft versorgt werden, wobei der Druck des zugeführten Abführgases im Wesentlichen gleich jenem des Wasserdampfs oder des Gemisches aus Wasserdampf und dem anderen Gas ist und wobei der erzeugte Sauerstoff wiedergewonnen wird.

14. Verfahren zum Betreiben eines Moduls (M1) eines Brennstoffzellenstapels SOFC nach einem der Ansprüche 3 bis 12, das Folgendes umfasst:
- Versorgen der Zufuhrleitungen des Kolbens mit Brennstoff wie etwa Wasserstoff oder Methan;
- Versorgen der Zufuhrleitungen des zweiten Verbinders mit Luft oder Sauerstoff, wobei der Druck des Brennstoffs und der Luft oder des Sauerstoffs, die zugeführt werden, im Wesentlichen gleich jenem des Wasserstoffs oder des Methans ist;
- während des Druckanstiegs im Inneren des Stapels Einstellen der Kompressionskraft, die durch den Kolben auf das eine oder die mehreren Elemente für elektrischen Kontakt ausgeübt wird; und
- Wiedergewinnen des überschüssigen Brennstoffs, des erzeugten Wassers einerseits und der überschüssigen Luft oder des überschüssigen Sauerstoffs andererseits in ihrer entsprechenden Wiedergewinnungsleitung.

## Claims

1. A module, intended to form an individual unit of an electrolysis or co-electrolysis reactor of SOEC type, comprising:
- an individual electrochemical cell (C1) formed of a cathode (2.1), of an anode (4.1) and of an electrolyte (3.1) inserted between the cathode and the anode,
- a first (5.1) and a second (5.2) device each forming an electrical and fluid interconnector, each consisting of a component made of electron-conducting and gastight material, the first and second interconnectors being arranged on either side of the individual cell; the second interconnector (5.2) being pierced with a conduit for recovering the hydrogen produced, which opens out at the periphery of the cell on the cathode side; the second interconnector (5.2) being pierced with a conduit for recovering the oxygen produced (57), which opens out at the periphery of the cell on the anode (4.1) side so as to carry out homogeneous distribution of the oxygen produced to the recovery conduit;
- a first electrically insulating seal (61) arranged at the periphery of the individual cell and bearing both against the first interconnector and against the second interconnector;
- a second seal (63), arranged at the periphery of the anode of the individual cell and bearing both against the second interconnector and against the electrolyte; the second seal being based on glass and/or glass-ceramic;
- mechanical means (11) for assembling the interconnectors with one another, suitable for clamping the first seal by compression;
- at least one electrical contact (9, 10) element arranged between one of the electrodes and one of the interconnectors;
- a compression piston (20) comprising a component made of electron-conducting and gastight material, the piston being mounted so as to slide inside the first interconnector, the piston being suitable for compressing the electrical contact element(s); the compressive force of the piston being adjusted as the pressure of the steam and hydrogen produced within the module increases; the compression piston being pierced with a conduit for supplying steam (50), which opens out on the cell on the cathode (2.1) side so as to carry out homogeneous distribution respectively of the steam supplied and the hydrogen produced from the supply conduit to the recovery conduit, and
- a sealing bellows (30), assembled by one end thereof to the piston and by the other end thereof to the first interconnector; the bellows being suitable both for containing the pressure of the steam and the hydrogen produced inside the module and for deforming along the direction of displacement of the piston.

2. The module according to Claim 1, the second interconnector (5.2) being pierced with a conduit (51) for supplying draining gas, such as air, on the cell on the anode side, so as to carry out homogeneous distribution respectively of the draining gas supplied and the oxygen produced from the supply conduit (51) to the recovery conduit (57).

3. A module, intended to form an individual unit of a fuel cell of SOFC type, comprising:
- an individual electrochemical cell (C1) formed of a cathode (2), of an anode (4) and of an electrolyte (3) inserted between the cathode and the anode,
- a first (5.1) and a second (5.2) device each forming an electrical and fluid interconnector, each consisting of a component made of electron-conducting and gastight material; the first and second interconnectors being arranged on either side of the individual cell; the second interconnector (5.2) being pierced with a conduit (59) for recovering the water produced, at the periphery of the cell on the anode side; the second interconnector (5.2) being pierced with a conduit (51) for supplying air or oxygen, which opens out on the cell on the cathode side, and with a conduit for recovering surplus air or oxygen, which opens out at the periphery of the cell on the cathode side so as to carry out homogeneous distribution of the air or oxygen from the supply conduit to the recovery conduit;
- a first electrically insulating seal (61) arranged at the periphery of the individual cell and bearing both against the first interconnector and against the second interconnector;
- a second seal (63), arranged at the periphery of the cathode of the individual cell and bearing both against the second interconnector and against the electrolyte; the second seal being based on glass and/or glass-ceramic;
- mechanical means (11) for assembling the interconnectors with one another, suitable for clamping the first seal by compression;
- at least one electrical contact (9,10) element arranged between one of the electrodes and one of the interconnectors;
- a compression piston (20) comprising a component made of electron-conducting and gastight material, the piston being mounted so as to slide inside the first interconnector, the piston being suitable for compressing the electrical contact element(s); the compressive force of the piston being adjusted as the pressure of the fuel and water produced within the module increases; the compression piston being pierced with a conduit for supplying fuel (50), which opens out on the cell on the anode (4.1) side so as to carry out homogeneous distribution respectively of the fuel supplied and the water produced from the supply conduit to the recovery conduit, and
- a sealing bellows (30), assembled by one end thereof to the piston and by the other end thereof to the first interconnector; the bellows being suitable both for containing the pressure of the fuel and the water produced inside the module and for deforming along the direction of displacement of the piston.

4. The Module according to one of the preceding claims, the first seal consisting of a washer or ring made of mica.

5. The module according to one of the preceding claims, comprising two electrical contact elements, preferably two metallic grids (9, 10), one of which between one (2.1) of the electrodes and one of the interconnectors (5.1), and the other (10) of which between the other (4.1) of the electrodes and the other of the interconnectors (5.2).

6. The module according to one of the preceding claims, the first and/or second interconnector comprising a first groove (54) formed between the first seal (61) and the cell (C1), the supply conduit (50) of the first interconnector being in communication with the first groove (54) so as to carry out homogeneous distribution of the steam supplied and the hydrogen produced or of the fuel supplied and the water produced, to the recovery conduit of the first interconnector.

7. The module according to one of the preceding claims, the second interconnector (5.2) comprising a second groove (57) formed inside a zone delimited by the second seal (63), the supply conduit (51) of the second interconnector being in communication with the second groove (57) so as to carry out homogeneous distribution of the oxygen produced or the air supplied, to the recovery conduit (57) of the second interconnector.

8. The module according to one of the preceding claims, wherein:
- the first and second interconnectors are each pierced with an additional conduit (52,56) for supplying steam or fuel; the two additional supply conduits being connected to one another via an electrically insulating connection tube (T); the additional supply conduit (52) of the first interconnector (5.1) being connected to the supply conduit (50) pierced in the piston (20) by a pipe (60) outside the module;
- the first seal (61) has, within it, a third seal (64), inside which the connection tube (T) is accommodated.

9. The module according to one of the preceding claims, the individual electrochemical cell (C1), the first (5.1) and second (5.2) interconnectors, the first (61) and second (63) seals, the piston (20) and the bellows (30) are of axisymmetrical form about a central axis (X), the conduits (50) for supplying reagent gases (steam or fuel) and (51) (draining gases (51), such as air or air and oxygen) opening out along the central axis (X).

10. The module according to one of the preceding claims, the metal component of the first and/or the second interconnector and/or the piston being made of ferritic steel containing approximately 20% chromium, preferably made of CROFER® 22APU or F18TNb, or based on nickel of Inconel® 600 or Haynes® 230® type.

11. The module according to one of the preceding claims, the bellows being made of ferritic steel containing approximately 20% chromium, preferably based on Inconel® 625 or Haynes® 230.

12. A process for operating an HTE or co-electrolysis electrolysis module (M1) according to one of Claims 1 to 2 and 4 to 12, according to which:
- the supply conduits (50) of the piston (20) are supplied with steam or with a mixture of steam and another gas chosen from carbon dioxide and nitrogen dioxide;
- as the pressure rises within the reactor, the compressive force applied by the piston to the electrical contact element(s) is adjusted;
- the hydrogen or the hydrogen and the nitrogen or carbon monoxide produced by steam electrolysis or co-electrolysis are recovered.

13. The operating process according to Claim 12, according to which the supply conduits (51) of the second interconnector (5.2) are supplied with draining gas, such as air, the pressure of the draining gas supplied being substantially equal to that of the steam or of the mixture of steam and the other gas, and the oxygen produced is recovered.

14. A Process for operating an SOFC fuel cell module (M1) according to one of Claims 3 to 12, according to which:
- the supply conduits of the piston are supplied with fuel, such as hydrogen or methane;
- the supply conduits of the second interconnector are supplied with air or oxygen, the pressure of the fuel and of the air or oxygen supplied being substantially equal to that of the hydrogen or methane;
- as the pressure rises within the cell, the compressive force applied by the piston to the electrical contact element(s) is adjusted;
- the surplus fuel, the water produced on one side and the surplus air or oxygen on the other side are recovered in their respective recovery conduit.
